Europäisches Patentamt

European Patent Office

Office européen des brevets

(11) Veröffentlichungsnummer: **0 464 346 A1**

## (12) EUROPÄISCHE PATENTANMELDUNG

(21) Anmeldenummer: **91108006.7**

(22) Anmeldetag: **17.05.91**

(51) Int. Cl.5: **G01B 11/16**

(30) Priorität: **12.06.90 DE 4018740**

(43) Veröffentlichungstag der Anmeldung:
**08.01.92 Patentblatt 92/02**

(84) Benannte Vertragsstaaten:
**AT CH DE ES FR GB IT LI SE**

(71) Anmelder: **STRABAG BAU-AG**
**Siegburger Strasse 241**
**W-5000 Köln-Deutz 21(DE)**

(72) Erfinder: **Die Erfinder haben auf ihre**
**Nennung verzichtet**

(74) Vertreter: **Hennicke, Albrecht, Dipl.-Ing. et al**
**Patentanwälte Dipl.-Ing. Buschhoff Dipl.-Ing.**
**Hennicke Dipl.-Ing. Vollbach**
**Kaiser-Wilhelm-Ring 24 Postfach 190 408**
**W-5000 Köln 1(DE)**

(54) **Vorrichtung zum Ermitteln von Längenänderungen eines Mediums längs einer Messstrecke.**

㊼ Vorrichtung zum Ermitteln von Längenänderungen eines Mediums (16) längs einer Meßstrecke (A), bei der mehrere Lichtwellenleiter (22-26) in einer Umhüllung (28,29) angeordnet sind, deren verspiegelte Enden (22a-26a) im Abstand voneinander längs der Meßstrecke (A) verteilt sind. Durch optische Längenmessung der einzelnen Lichtwellenleiter können Art und Ort von Längenänderungen im zu überwachenden Medium (16) mit einer optischen Entfernungsmeßeinrichtung jederzeit festgestellt werden.

Die Erfindung betrifft eine Vorrichtung zum Ermitteln von Längenänderungen eines Mediums längs einer Meßstrecke, mit mehreren Meßmarken, die in verschiedenen Abständen von einem Bezugspunkt entlang der Meßstrecke angeordnet sind.

Vorrichtungen dieser Art, die auch "Extensometer" genannt werden, dienen zum Erfassen von Setzungen im Boden, zum Ermitteln von Rissen, die in einem Bauwerk oder in der Erde auftreten, oder zum Feststellen von Verschiebungen, welche ein Bauwerk, beispielsweise eine Staumauer, unter dem Einfluß äußerer Kräfte, beispielsweise unter dem Wasserdruck eines Speicherbekkens, erleidet.

Bei einem bekannten Extensometer (DE 29 20 886 C2) sind in einer in dem zu untersuchenden Medium niedergebrachten Bohrung mehrere Meßmarken in jeweils gleichem Längsabstand voneinander fest in der Bohrung verankert. Der Abstand zwischen jeweils zwei Meßmarken kann mit einer Sonde überprüft werden, die in das Bohrloch eingeführt wird und zwei Meßköpfe aufweist, die zwischen zwei benachbarten Meßmarken verspannt werden und deren Abstand durch einen induktiven Wegaufnehmer ermittelt und über ein Kabel einem Digitalablesegerät zugeführt wird.

Dieses bekannte Meßgerät hat den Nachteil, daß jeweils immer nur ein Abstand zwischen zwei Meßmarken überprüft werden kann und der Meßbereich von der Länge der Meßsonde begrenzt wird. Außerdem ist die Messung sehr aufwendig und kann immer nur an einer Stelle der Bohrung vorgenommen werden.

Bei einem anderen bekannten Extensometer (DD-251 198 A1) wird eine in dem zu überwachenden Medium niedergebrachte Bohrung mit Filterkies gefüllt, indem Meßmarken im Längsabstand voneinander durch Zementinjektionen befestigt werden. Die Meßmarken befinden sich an den freien Enden von dünnen Stangen, die in dünnen Rohren im Filterkies längsbeweglich sind und mit ihren Kopfenden aus der Bohrung herausragen. An den Kopfenden der Stangen befinden sich elektrische Wegaufnehmer, die Längsverschiebungen der Stange an deren Kopfende erfassen und zu einem Anzeigegerät weiterleiten.

Bei diesem bekannten Extensometer ist es schwierig, die Meßmarken in größere Tiefen des Bohrloches niederzubringen und dort zu verankern, da hierfür zusätzlich Injektionsleitungen vorgesehen werden müssen. Außerdem nehmen die in Rohren geführten Stangen quer zu ihrer Längsrichtung viel Raum ein, so daß die Bohrung der Meßstrecke schon für relativ wenige Meßmarken einen großen Durchmesser haben muß.

Es gibt auch bereits ein Verfahren zum Überwachen der Verformungen von Bauteilen mit Lichtwellenleitern (DE-36 35 053 A1), bei dem die Lichtwellenleiter mit dem zu überwachenden Bauteil verbunden und gegenüber diesem oder in sich selbst soweit vorgespannt sind, daß ihre Beanspruchung bei allen Verformungen des Bauteiles im Zugbereich bleibt. Mit diesem bekannten Verfahren können zwar Verformungen des Bauteiles ermittelt, aber diese nicht einwandfrei lokalisiert werden. Außerdem müssen die Lichtwellenleiter durchgängig sein, um eine ständige Überwachung zu gewährleisten.

Es gibt auch bereis ein Verfahren zur kontinuierlichen Dämpfungsmessung von Lichtwellenleiter-Sensoren mit nur einem zugänglichen Ende (DE-38 04 135 A1), bei dem ein Lichtstrahl am verspiegelten Ende eines Lichtwellenleiter-Sensors reflektiert und über einen Strahlteiler einem Meßempfänger zugeleitet wird, wobei der Einfluß von Störgrößen durch eine Referenzmessung mit einem den Störgrößen nicht ausgesetzten Referenz-Lichtwellenleiter-Sensor ausgeschaltet werden kann. Mit diesem bekannten Verfahren kann nur die Tatsache einer Längenänderung in dem von dem Lichtwellenleiter-Sensor zu überwachenden Bereich, nicht jedoch die Ursache und der Ort dieser Längenänderung festgestellt werden.

Aufgabe der Erfindung ist es, eine Vorrichtung der eingangs näher erläuterten Art so auszubilden, daß die Längenänderungen eines Mediums längs einer Meßstrecke sowohl nach ihrer Größe als auch nach dem Ort, an dem sie auftreten, ständig automatisch überwacht werden können, wobei die Vorrichtung nur einen geringen Raumbedarf und einen sehr einfachen Aufbau hat und leicht in Stellung gebracht werden kann und sowohl gerade als auch gekrümmte Meßstrecken überwachen kann.

Diese Aufgabe wird mit der Erfindung dadurch gelöst, daß jede Meßmarke das verspiegelte Ende eines Lichtwellenleiters ist, der am Bezugspunkt festgelegt und über eine elastische Masse mit einer Umhüllung verbunden ist, die längs der Meßstrecke mit dem zu überwachenden Medium fest verbunden ist.

Bei der erfindungsgemäßen Vorrichtung ist die Umhüllung mit den in ihr eingebetteten Lichtwellenleitern zugleich Meßrohr, Sensor und Transportkanal für ein optisches Meßsignal, welches durch die Längenänderungen moduliert wird, die in dem zu überwachenden Medium auftreten. Da die Lichtwellenleiter nur einen sehr geringen Durchmesser haben müssen, können sehr viele von ihnen auf kleinstem Raum untergebracht werden. Die Umhüllung mit den von ihnen umschlossenen Lichtwellenleitern hat deshalb nur einen sehr geringen Durchmesser und benötigt nur eine kleine Bohrung oder einen Kanal mit geringem Durchmesser im Boden oder in dem zu überwachenden Bauwerk.

Nach der Erfindung kann die jeweilige Länge des Weges ständig gemessen werden, den ein kohärenter Lichtstrahl in jedem einzelnen Lichtwellenleiter von einem Bezugspunkt zur Meßmarke und zurück zum Bezugspunkt zurücklegt. Durch Vergleich dieser optischen Wegmessung mit einem zu Beginn der Messungen ermittelten Anfangswert können die Längenänderungen des Mediums in dem zu überwachenden Bereich ständig und automatisch festgestellt werden, die im Laufe der Zeit dort auftreten.

Da der zur Messung benutzte Lichtstrahl durch Totalreflexion im Kern des Lichtwellenleiters diesen nicht verlassen kann, ist es auch möglich, Längenänderungen, insbesondere Dehnungen, Risse und Stauchungen längs einer gebogenen Meßstrecke zu überwachen. Dies ist dann besonders vorteilhaft, wenn die Meßstrecke in gebogenen Bauteilen, beispielsweise Bogenstaumauern, oder um Ecken herum läuft.

Bei der erfindungsgemäßen Vorrichtung kann der mit vielen Lichtwellenleitern ausgerüstete Sensor vorgefertigt werden und eine große Länge haben. Er ist elektromagnetisch neutral und feuchtigkeitsunempfindlich, was sich in feuchten Bauwerken oder im Boden als sehr vorteilhaft erweist.

Besonders zweckmäßig ist es, wenn alle Lichtwellenleiter in einer gemeinsamen Umhüllung angeordnet sind. Hierbei kann die Umhüllung einen Schlauch oder ein Rohr aufweisen, in dem die Lichtwellenleiter angeordnet sind und mit dem sie längs der Meßstrecke durch eine elastische Masse verbunden sind, während die verspiegelten Enden der Lichtwellenleiter an dem Schlauch oder Rohr unverrückbar befestigt sind. Das Rohr oder der Schlauch selbst können aus einem spröden Material bestehen, welches beim Auftreten von Klüften und Spalten in dem zu überwachenden Medium quer zu seiner Längsrichtung aufreißt, wenn Zugkräfte auf das Rohr oder den Schlauch einwirken. Eines der sich auseinanderbewegenden Rohr- oder Schlauchteile nimmt dann das verspiegelte Ende mindestens eines Sensors mit, wobei sich der in der elastischen Masse eingebettete Lichtwellenleiter dehnen kann.

Bei einer anderen Ausführungsform kann auch der Schlauch oder das Rohr aus einem elastischen Material bestehen, so daß das Rohr oder der Schlauch gedehnt oder gestaucht wird, je nachdem, ob Zugkräfte oder Druckkräfte auf das Rohr oder den Schlauch einwirken.

Das Rohr der Umhüllung besteht zweckmäßig aus einem Faserverbundwerkstoff, beispielsweise in Kunststoff eingebetteten Glasfasern oder Kohlefasern. Derartige Faserverbundwerkstoffe haben einen niedrigen Elastizitätsmodul und sind deshalb innerhalb weiter Grenzen dehnbar, haben aber zugleich auch eine hohe Festigkeit. Die Lichtwellenleiter sind mit ihren verspiegelten Enden am Rohr festgelegt, beispielsweise an der Rohrinnenwandung festgeklebt oder in Traversen befestigt, die ihrerseits in der Wandung des Umhüllungsrohres oder -schlauches verankert sind. Die Lichtwellenleiter sind zweckmäßig auf ihrer ganzen Länge in Kunststoff eingebettet, der vorzugsweise elastisch ist und das Rohr der Umhüllung vollständig ausfüllt und einerseits die Lichtwellenleiter vor Beschädigung schützt und andererseits die von dem zu überwachenden Medium auf die Umhüllung übertragenen Längenänderungen auf die Lichtwellenleiter überträgt, die hierdurch analoge Längenänderungen erfahren und gedehnt oder gestaucht werden.

Die Umhüllung kann längs der gesamten Meßstrecke mit den zu überwachenden Medium verklebt sein, wobei sie sich im Inneren des zu überwachenden Mediums, z.B. im Inneren eines Betonbauteiles, oder aber auch auf der Außenseite eines solchen Betonbauteiles befinden kann. Vorzugsweise ist der aus Lichtwellenleitern und Umhüllung bestehende Sensor längs der gesamten Meßstrecke in dem zu überwachenden Medium eingebettet und mit diesem durch eine erhärtende Masse verbunden, z.B. in einem Bauteil einbetoniert oder in einer im Boden niedergebrachten Bohrung mit einem Injektionsmörtel festgelegt, der den Raum zwischen der Bohrlochwandung und dem Außenumfang der Umhüllung des Sensors satt ausfüllt.

Die Lichtwellenleiter des Sensors sind in vorteilhafter Weise ständig mit einer Auswerteeinrichtung verbunden, die die Länge der Lichtwellenleiter permanent überwacht, und die mit einer Alarmvorrichtung verbunden sein kann, die beim Erreichen bestimmter Meßwerte einen Alarm auslöst, beispielsweise dann, wenn in dem zu überwachenden Medium, beispielsweise dem Untergrund eines Bauwerkes, Klüfte auftreten, die ein bestimmtes vorgeschriebenes Maß überschreiten, oder wenn die Auswerteeinheit Setzungen registriert, die vorbestimmte Werte übersteigen.

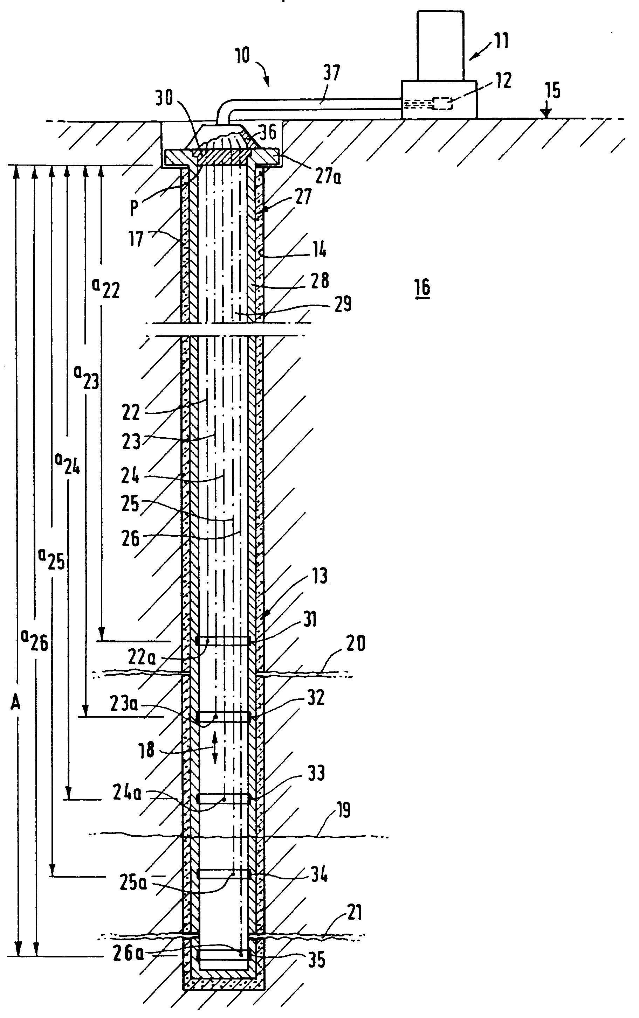

Weitere Merkmale und Vorteile der Erfindung ergeben sich aus der nachfolgenden Beschreibung und der Zeichnung, in der eine Vorrichtung nach der Erfindung in einer Seitenansicht und teilweise im Längsschnitt schematisch dargestellt ist.

Unter einer nicht dargestellten Staumauer sind im Erdboden 16 Setzungen und Felsverschiebungen zu erwarten, die mit einem Extensometer nach der Erfindung über einen längeren Zeitraum hinweg entlang einer im Boden vorgesehenen Meßstrecke ständig überwacht und aufgezeichnet werden sollen. Die Vorrichtung oder das Extensometer, mit denen die Setzungen, Dehnungen und Verschiebungen im Boden ermittelt werden sollen, ist in seiner Gesamtheit mit 10 bezeichnet und besteht aus einer oberhalb der Geländeoberfläche oder in einer Kammer der Staumauer untergebrachten Auswerteeinrichtung 11 mit einer optischen Entfernungsmeßvorrichtung 12 und aus einem Sensor 13, der im Erdboden 16 angeordnet ist und dort eine Meßstrecke A abtastet. Zu diesem Zwecke ist der Sensor 13 in einer Bohrung 14 angeordnet, die unter der Sohle 15 der nicht dargestellten Staumauer etwa senkrecht im Erdboden 16 niedergebracht ist und in der der Sensor 13 mit einem Zement- oder Kunststoffmörtel oder einer anderen erhärtenden Masse 17 eingebettet und mit der Bohrlochwandung fest verbunden ist. In dem Erdboden 16, der das zu überwachende Medium darstellt, können infolge von Setzungen Stauchungszonen und infolge von Verschiebungen Dehnungszonen auftreten, die sich quer zur Längsrichtung 18 der Bohrung 14 erstrecken und von denen eine Stauchungszone in der Zeichnung durch eine etwa horizontal verlaufende Linie 19 und zwei Dehnungszonen 20 und 21 durch horizontal verlaufende Doppellinien angedeutet sind.

Der in der Erdbohrung 14 angeordnete Sensor 13 besteht aus einer Vielzahl von Lichtwellenleitern (LWL), von denen in der Zeichnung nur fünf Lichtwellenleiter 22, 23, 24, 25 und 26 dargestellt sind. Diese Lichtwellenleiter 22 bis 26 werden längs der Meßstrecke A von einer Umhüllung fest umschlossen, die in ihrer Gesamtheit mit 27 bezeichnet ist und aus einem äußeren Rohr 28 und einer im Inneren des Rohres angeordneten elastischen Masse 29 besteht, in der die Lichtwellenleiter 22 bis 26 derart eingebettet sind, daß sie im Bereich der Meßstrecke A auf ihrer ganzen Länge mit dieser elastischen Masse 29 verbunden sind. Das äußere Rohr 28 der Umhüllung besteht aus einem Faserverbundwerkstoff, beispielsweise aus glasfaserverstärktem Kunststoff, und hat einen Außendurchmesser von etwa 30 mm. Die elastische Masse 29 im Inneren des Rohres 28 ist ein Elastomer, vorzugsweise ein elastischer Kunststoff, der gut an der Innenwandung des Rohres 28 einerseits und an den Lichtwellenleitern 22 bis 26 andererseits haftet. Anstelle des Rohres aus Glasfaserverbundwerkstoff kann auch ein Schlauch aus genügend zähem, aber biegsamem Kunststoff verwendet werden, so daß der Sensor biegsam ist und auch längs gekrümmter Meßstrecken verlegt werden kann. Hierbei ist es auch möglich, den Sensor längs einer gewünschten Meßstrecke außen auf ein Bauwerkteil aufzukleben oder im Inneren eines Bauwerkes in gekrümmter Lage zu verlegen und dort einzubetonieren oder auf sonstige Weise zu befestigen.

Bei dem dargestellten Ausführungsbeispiel hat der Sensor einen Außendurchmesser von etwa 30 mm. Der Durchmesser kann jedoch auch größer sein, und es können weit mehr als nur fünf Lichtwellenleiter in der Umhüllung 27 des Sensors 13 untergebracht werden, der eine Gesamtlänge bis zu 50 m haben kann.

Man erkennt aus der Zeichnung, daß die Lichtwellenleiter 22 bis 26 am oberen Ende 27a des Umhüllungsrohres 28 in einer Verschlußplatte 30 befestigt sind und verschiedene Längen haben. Das freie untere Ende 22a bzw. 23a bzw. 24a bzw. 25a bzw. 26a der Lichtwellenleiter 22 bis 26 ist verspiegelt und an dem Rohr 28 der Umhüllung 27 festgelegt. Zu diesem Zweck können die verspiegelten Enden 22a bis 26a an der Innenwandung des Rohres 28 festgeklebt sein. Bei dem dargestellten Ausführungsbeispiel sind die verspiegelten Enden in durchbrochenen Traversen 31 bis 35 befestigt, die in der Wandung des Rohres 28 verankert sind. Die verspiegelten Enden 22a bis 26a der Lichtwellenleiter 22 bis 26 stellen die Meßmarken dar, die bei jedem Lichtwellenleiter 22 bis 26 verschiedene Abstände $a_{22}$, $a_{23}$, $a_{24}$, $a_{25}$ und $a_{26}$ von einem Bezugspunkt P haben, der von der unteren Stirnfläche der oberen Verschlußplatte 30 gebildet wird, aus der die dort festgelegten Lichtwellenleiter 22 bis 26 aus der Verschlußplatte 30 in eine Haube 36 austreten. Oberhalb der Verschlußplatte 30 sind die Lichtwellenleiter in der Haube 36 zusammengeführt und in an sich bekannter Weise an die Lichtwellenleiter eines vorzugsweise biegsamen Lichtwellenleiterkabels 37 angeschlossen, das zu der Auswerteeinrichtung 11 führt.

In der Auswerteeinrichtung 11 wird durch Phasenmodulation oder mit Hilfe eines handelsüblichen Lichtlaufzeitmeßgerätes (OTDR) die jeweilige Länge der Strecke gemessen, die ein von einer kohärenten Lichtquelle ausgehender Lichtstrahl bis zum verspiegelten Ende im Lichtwellenleiter und wieder zurück zum jeweiligen Meßzeitpunkt durchläuft. Diese Länge wird dann mit derjenigen Länge verglichen, die ein analoger Lichtstrahl unmittelbar nach dem Einbau des Senders zurückgelegt hatte. Aus den Differenzen der Messungen zur Zeit des Einbaues des Senders und zum Überprüfungszeitpunkt lassen sich Rückschlüsse darauf ziehen, ob zum Zeitpunkt der Messung Änderungen eingetreten sind, wie groß diese waren, ob es sich um Dehnungen oder Stauchungen handelte und in welchem Bereich der Meßstrecke diese Längenänderungen stattgefunden haben.

Hat beispielsweise in dem Bereich zwischen dem verspiegelten Ende 22a des Lichtwellenleiters 22 und dem verspiegelten Ende 23a des Lichtwellenleiters 23 eine Dehnung des Untergrundes stattgefunden, die in der Zeichnung durch die Doppellinie 20 dargestellt ist, so ist dies im Meßzeitpunkt dadurch erkennbar, daß alle Lichtwellenleiter 23, 24, 25 und 26 um den gleichen Betrag länger geworden sind, der Lichtwellenleiter 22 jedoch in seiner Länge unverändert geblieben ist. Ähnliches ist festzustellen, wenn es zwischen dem verspiegelten Ende 25a des Lichtwellenleiters 25 und dem verspiegelten Ende 26a des Lichtwellenleiters 26 zu einer Dehnung gekommen ist, die in der Zeichnung durch den horizontalen Riß 21 angedeutet ist. In diesem Falle ist nur der Lichtwellenleiter 26 länger geworden.

Ist dagegen im Bereich zwischen dem verspiegelten Ende 24a des Lichtwellenleiters 24 und dem verspiegelten Ende 25a des Lichtwellenleiters 25 im Boden eine Stauchung 19 aufgetreten, haben sich die Lichtwellenleiter 25 und 26 verkürzt, während die Länge der Lichtwellenleiter 22, 23 und 24 unverändert geblieben ist.

Durch Addition und Subtraktion der positiven und negativen Längenänderungen in den einzelnen Lichtwellenleitern können auch mehrere Stauchungen und Dehnungen erfaßt und über die Länge der Meßstrecke in deren einzelnen Meßbereichen lokalisiert werden, die durch die Abstände zwischen den verspiegelten Enden von jeweils zwei Lichtwellenleitern definiert sind.

Man erkennt aus der Zeichnung, daß auch größere Dehnungen, welche einen Riß im Rohr 28 der Umhüllung 27 zur Folge haben, das Meßergebnis so lange nicht beeinflussen, wie die Lichtwellenleiter nicht zerstört werden, die in der Umhüllung 27 die Dehnungszone durchlaufen. Da die Lichtwellenleiter eine verhältnismäßig große Länge haben und vollständig in einer elastischen Masse eingebettet sind, werden durch Risse im zu überwachenden Medium verursachte Längenänderungen auf die ganze Länge der Lichtwellenleiter verteilt und aufgenommen.

Als Auswerteeinrichtung kann ein an sich bekannter optischer Entfernungsmesser eingesetzt werden, der Lichtpulse durch die Lichtwellenleiter sendet, wo sie an deren verspiegelten Enden reflektiert werden und wieder zum Ausgangspunkt zurückkehren. Hierbei wird die Wellenlänge der Lichtträgerwellen, die von einer kohärenten Lichtquelle ausgeht und an dem verspiegelten Ende des Lichtwellenleiters reflektiert wird, von einem Modulator so lange variiert, bis eine stehende Welle zwischen Lichtquelle und Spiegel entsteht. Die Anzahl der modulierten Lichtpulse wird dann festgestellt und mit der Anzahl der Lichtpulse verglichen, die unmittelbar nach dem Einbau des Senders für jeden einzelnen Lichtwellenleiter festgestellt worden war. Durch Verwendung eines softwaregesteuerten Multiplexers können alle verschieden langen Lichtwellenleiter eines Sensors an ein einziges Entfernungsmessgerät angeschlossen werden und es ist möglich, den Meßablauf rechner-gesteuert automatisch ablaufen zu lassen.

Die Erfindung ist nicht auf das dargestellte und beschriebene Ausführungsbeispiel beschränkt, sondern es sind mehrere Änderungen und Ergänzungen möglich, ohne den Rahmen der Erfindung zu verlassen. Beispielsweise kann der Sensor nach der Erfindung auch in horizontaler oder schräger Lage eingebaut werden, und er kann sich auch gekrümmten Meßstrecken anpassen. Ferner kann der Sensor in dem zu überwachenden Medium nicht nur einbetoniert werden, sondern es ist auch möglich, ihn mit dem zu überwachenden Medium zu verkleben oder auf andere Weise zu verbinden.

**Patentansprüche**

1. Vorrichtung zum Ermitteln von Längenänderungen eines Mediums längs einer Meßstrecke mit mehreren Meßmarken, die in verschiedenen Abständen von einem Bezugspunkt entlang der Meßstrecke angeordnet sind, **dadurch gekennzeichnet**, daß jede Meßmarke das verspiegelte Ende (22a - 26a) eines Lichtwellenleiters (22 - 26) ist, der am Bezugspunkt (P) festgelegt und über eine elastische Masse (29) mit einer Umhüllung (27) verbunden ist, die längs der Meßstrecke (A) mit dem zu überwachenden Medium (16) fest verbunden ist.

2. Vorrichtung nach Anspruch 1, **dadurch gekennzeichnet**, daß alle Lichtwellenleiter (22 - 26) in einer gemeinsamen Umhüllung (27) angeordnet sind.

3. Vorrichtung nach Anspruch 1 oder 2, **dadurch gekennzeichnet**, daß die Lichtwellenleiter (22 - 26) in mindestens einem Schlauch oder Rohr (28) angeordnet und mit diesem längs der Meßstrecke (A) durch die elastische Masse (29) verbunden sind, während die verspiegelten Enden (22a - 26a) der Lichtwellenleiter (22 - 26) an dem Schlauch oder Rohr (28) unverrückbar befestigt sind.

4. Vorrichtung nach einem der Ansprüche 1 bis 3, **dadurch gekennzeichnet**, daß der Schlauch oder das Rohr (28) in Längsrichtung (18) dehnbar und/oder stauchbar ist.

5. Vorrichtung nach einem der Ansprüche 1 bis 4, **dadurch gekennzeichnet,** daß das Rohr (28) der Umhüllung (27) aus einem Faserverbundwerkstoff besteht und die Lichtwellenleiter (22 - 26) mit ihren verspiegelten Enden (22a - 26a) am Rohr (28) festgelegt und auf ihrer ganzen Länge ($a_{22}$ - $a_{26}$) in elastischen Kunststoff (29) eingebettet sind, der das Rohr (28) vollständig ausfüllt.

6. Vorrichtung nach einem der Ansprüche 1 bis 5, **dadurch gekennzeichnet**, daß die Umhüllung (27) längs der gesamten Meßstrecke (A) mit dem zu überwachenden Medium (16) verklebt ist.

7. Vorrichtung nach einem der Ansprüche 1 bis 5, **dadurch gekennzeichnet,** daß die Umhüllung (27) längs der gesamten Meßstrecke (A) in das zu überwachende Medium (16) mit einer erhärtenden Masse (17) eingebettet ist.

8. Vorrichtung nach einem der Ansprüche 1 bis 7, **gekennzeichnet durch** eine Auswerteeinrichtung (11), die ständig mit den Lichtwellenleitern (22a - 26a) verbunden ist und deren Länge permanent überwacht.

Europäisches
Patentamt

**EUROPÄISCHER RECHERCHENBERICHT**

Nummer der Anmeldung

| | **EINSCHLÄGIGE DOKUMENTE** | | EP 91108006.7 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) |
|---|---|---|---|
| A | GB - A - 2 136 113 (PLESSEY) * Gesamt * -- | 1 | G 01 B 11/16 |
| A | US - A - 3 894 427 (SCHUERMANN) * Gesamt * -- | 1 | |
| A | GB - A - 1 145 517 (NMI) * Zusammenfassung; Fig. 4 * ---- | | |

| | | RECHERCHIERTE SACHGEBIETE (Int. Cl.⁵) |
|---|---|---|
| | | G 01 B 5/00 G 01 B 11/00 G 01 B 21/00 G 01 M 5/00 |

Der vorliegende Recherchenbericht wurde für alle Patentansprüche erstellt.

| Recherchenort | Abschlußdatum der Recherche | Prüfer |
|---|---|---|
| WIEN | 02-10-1991 | TOMASELLI |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82